# EUROPEAN PATENT SPECIFICATION

(11) **EP 2 290 019 B1**
(45) Date of publication and mention of the grant of the patent: **24.10.2012**
(21) Application number: 10251393.4
(22) Date of filing: 05.08.2010
(51) Int. Cl.: C09D 5/00, E04F 13/02, E04F 13/04

(54) **Plastering composition**
Verputzzusammensetzung
Composition de plâtrage

(30) Priority: 05.08.2009 GB 0913693; 19.04.2010 GB 201006521
(43) Date of publication of application: 02.03.2011
(73) Proprietor: Plasprime Ltd., Ulverston, Cumbria LA12 7AF (GB)
(72) Inventor: Lindow, Kevin, Cumbria LA12 7AF (GB)
(74) Representative: Wilson Gunn

(56) References cited:
- DE-A1- 19 857 876
- JP-A- 8 295 624
- US-A1- 2008 032 055
- US-A1- 2009 004 468

## Description

The present invention relates to a composition which can be used in the construction industry, particularly in plastering, and which can be particularly used as a primer for plastering a surface.

Plastering plays an integral part in the construction of a vast majority of houses and other buildings. A common plastering technique involves applying two coats to a surface, a primer and a second, or plaster, coat.

The composition conventionally used in the industry for the primer is a simple mixture of polyvinyl acetate (PVA) and water, in varying proportions from, for example from a 5:1 PVA:water mix to a 1:1 mix.

However, the use of this composition creates a smooth surface on the primer. This can create problems when applying the plaster, as the plaster needs to be applied before the primer has fully dried out and is still tacky so the plaster is able to adhere to the primer. Once the primer dries, the plaster simply slides over the dry primer, making it difficult to satisfactorily apply the plaster.

Additionally, the need for the primer to be tacky also means that the application of the plaster is far more time critical, as it has to be applied before the primer dries. This means that the plaster must be applied the same day as the primer. This results in the plaster having to be speedily applied in order that it is finished before the primer is dry, but can often result in a less than satisfactory plaster application due to the speed of the application.

In an unrelated technical field, JP 8295624 A discloses a plaster base that is used as an external medical patch. The plaster base is made by dispersing water absorbing resin powder and/or water-soluble polymer powder into a rubber-based tacky agent layer. The plaster base is described as having high medicine absorbing properties and useful for medicine treatment.

DE 19857876 A1 discloses a water based polymer that can be used as a pressure sensitive adhesive (PSA). PSAs form a permanently tacky film which adheres to a very wide variety of surfaces under slight pressure at room temperature and are used to produce self-adhesive products, such as labels, tapes and sheets. The PSA comprises aqueous polymer dispersions wherein the polymer particles comprise at least two mutually different water-insoluble polymers P and P', said dispersions being obtainable by free-radical addition polymerization of ethylenically unsaturated monomers.

It would therefore be desirable to provide a composition which could be used as a primer for plastering a surface which could be permitted to dry before a plaster is applied thereon, and which did not cause the above-mentioned difficulties when applying the plaster. The present invention overcomes one or more of these difficulties.

According to the present invention there is provided a primer composition for use in the construction industry comprising an adhesive agent, particles of a solid plastic material and water, for preparing a surface to which plaster or render may subsequently be applied.

The current state of the art for plaster primers that contain an aggregate or particles use a binder system comprising a water based polymer (*e.g*. PVA, EVA, SBR etc) to bond an aggregate to the background which is to be primed. The aggregate in said products is generally a course aggregate comprising of one of the following: silica sand, limestone, chalk, dolomite, calcite etc.

The course aggregate provides some mechanical key for the primer to engage the plaster, whilst the polymer provides some chemical adhesion. In the present invention, a quantity of a plastic aggregate provides the mechanical key.

Traditional, state of the art primers containing an aggregate are problematical in that the solid aggregate is much denser than the liquid phase resulting in the aggregate settling out. Also, the large particles do not spread evenly when applied to a background and leave high peaks resulting in an uneven key being formed and more plaster being consumed to cover the high spots. Also, the aggregate is easily dislodged when skim plaster is finished with firm use of a metal trowel. The use of dense aggregates results in a high specific gravity of the finished product.

The plastic particles used in the present invention to provide the mechanical key are much finer and more evenly distributed throughout the matrix. The result when applied is that the texture is much more fine and even than current state of the art products and there are more particles per square area so that there is increased mechanical key.

The plastic particles used in the invention have a similar density to the liquid phase than current state of the art products. This results in no settling of the particles and a lower density product.

The benefits of the current invention over state of the art products can be detailed as follows:-
1. Plastic provides a more even texture - and therefore a greater mechanical key.
2. Plastic gives a lower profile mechanical key - which results in less finish plaster being used.
3. Plastic is more closely bound to the substrate - it does not debond.
4. Plastic does not settle in the product- so no mixing is required.
5. Plastic results in lower density - reducing transport costs and environmental impact.
6. The plastic used can be from the recycling industry - reusing waste material lowers the products environmental impact.

Exemplary, but non-limiting, examples of the adhesive agent include polyvinyl acetate (PVA), styrene-butadiene rubber (SBR), dammar resin, a cellulose derivative such as cellulose sodium glycolate, methyl cellulose, carboxy methylhydroxyethyl cellulose, hydroxyethyl cellulose, and propyl cellulose, sodium alginate, starch, dextrin, a polyvinyl alcohol, a (poly)vinyl resin, sodium silicate or other rubber-based adhesives or their constituent elements. Other suitable adhesives which are commonly used in plastering will be readily apparent to a person skilled in the art and such adhesives are also envisioned for use in the compositions of the invention. The adhesive agent sets to give a tough yet flexible finish when it is applied to a surface.

Typically, the composition may comprise between about 5.0-50% by weight of the adhesive agent, more typically between about 10-30% by weight, still more typically about 15% by weight.

The solid plastic material is typically in a particulate form. By 'particulate' or 'particles' it is intended to include any small pieces of material, including granules and shavings. The solid material is used to create a degree of friction upon which the plaster of the plaster is able to grip. The plastic material is typically a recycled plastic material, or a virgin plastic material.

According to one embodiment of the invention, the particles may be between about 400-1000 µm in size, typically between about 500-900 µm, more typically between about 600-800 µm, and still more typically about 700 µm.

The solid plastic material is typically relatively evenly distributed within the composition as a suspension in the adhesive agent, and is sufficiently stable to be able to remain relatively evenly distributed therein over long periods of time without 'settling out', by *e.g*. floating to the surface or sinking, thus removing the need for the composition being stirred every time before use. The actual size of the particles is not especially important, although they should be sufficiently small that they are not clearly visible in the coat.

Typically, the composition comprises between about 5.0-50% by weight of the solid particles, more typically between about 10-30% by weight, still more typically about 15% by weight.

Water makes up most or all of the remainder of the composition. Typically, the composition comprises between about 0-60% by weight thereof, more typically between about 30-60% by weight, still more typically about 40% by weight.

Other components which may conventionally be found in compositions for use in plastering may also be used in the composition of the invention. Examples of such components include but are not limited to colorants, fillers (*e.g*. chalk), aggregates (*e.g*. Perlite), anti-foaming agents, biocides, pigment dispersion, dispersive agents, thickeners, pH buffer and a stabiliser material. Exemplary, but non-limiting quantities of such components in the composition of the invention are given hereinbelow.

Typically, the composition may comprise between about 0-1.0% by weight of an anti-foaming agent, more typically between about 0.05-0.2% by weight, still more typically about 0.1% by weight.

Typically, the composition may comprise between about 0.05-1.0% by weight of a biocide, more typically between about 0.1-0.5% by weight, still more typically about 0.2% by weight.

Typically, the composition may comprise between about 0-2.0% by weight of a pigment dispersion, more typically between about 0.05-0.2% by weight, still more typically about 0.1% by weight.

Typically, the composition may comprise between about 0-1.0% by weight of a dispersant, more typically between about 0.05-0.2% by weight, still more typically about 0.1% by weight.

Typically, the composition may comprise between about 0-10.0% by weight of one or more thickeners, more typically between about 1.5-5.0% by weight, still more typically about 3.0-4.0% by weight.

Typically, the composition may comprise between about 0-50% by weight of a filler, more typically between about 15-30% by weight, still more typically about 25% by weight.

Typically, the composition may comprise between about 0-1.0% by weight of a pH buffer, more typically between about 0.1-0.5% by weight, still more typically about 0.3% by weight.

Exemplary, but non-limiting, examples of the stabiliser material include substances comprising linseed oil, an aluminium sulphate compound such as potassium sulphate alum, ammonium alum, or sodium alum. Other suitable stabilisers which are commonly used in plastering will be readily apparent to a person skilled in the art and such adhesives are also envisioned for use in the compositions of the invention. The stabiliser also acts as a waterproofing agent for the composition.

According to one embodiment, one typical composition according to the invention could comprise 2-3 parts bonding agent (*e.g*. PVA), 1 part chalk, 5 parts water, 6 parts plastic.

As mentioned above, one disadvantage of existing plastering primer mixes is that the plaster needs to be applied before the primer has fully dried out and is still tacky, resulting in the plaster simply sliding over the primer, making it difficult to satisfactorily apply the plaster.

The composition of the invention overcomes this problem as it can be left to dry fully before the plaster is added. The composition of the invention allows for a gap of several days between the applications of the primer and the plaster. This has significant practical advantages over the simple PVA/water primer mixes. Firstly, the dry primer is not tacky, so the problem of the plaster sliding over it is removed. The plaster adheres to the primer much more effectively, due to this and the solid plastic particles in the composition, creating a better finish. Also, because the primer does not have to be tacky, a plasterer does not have to rush to apply the plaster before the primer dries; he can take more time and ensure a high quality finished job.

A further advantage of the composition of the invention is that it permits a much more even distribution of the solid particles in the composition once it is applied to a surface. In existing compositions, the solid particles are effectively gathered up when applying the plaster, thus creating areas on the surface with many solid particles and other areas with hardly any. This uneven distribution is untidy and unsightly.

According to a further aspect of the invention, there is provided a method of manufacturing a primer composition for use in the construction industry comprising an adhesive agent, particles of a solid plastic material and water as defined hereinabove, comprising the steps of:
i) providing an adhesive agent, particles of a solid plastic material and water; and
ii) mixing these components together.

Typically, the water is added to a mixer first, and the other components are added so that the adhesive agent is added to the water before the solid plastic material. However, the solid plastic material may be added to the water before the adhesive agent if desired.

According to a further aspect of the invention, there is provided a use of the primer composition of the above aspect in the preparation of a surface to which plaster or render may be subsequently applied.

According to a further aspect of the invention, there is provided a method of preparing a surface to which plaster or render may subsequently be applied, comprising applying an amount of the primer composition as defined hereinabove, to the surface prior to the application of the plaster or render.

### Example

An exemplary composition in accordance with the invention is detailed in Table 1 below.

**Table 1**

| | | Wt.% | FUNCTION |
|---|---|---|---|
| 1 | WATER | 40.8 | DILUENT |
| 2 | DISPELAIR CF 525 | 0.1 | ANTIFOAM |
| 3 | ACTICIDE FS(N) | 0.2 | BIOCIDE |
| 4 | GEMSPERSE GREEN | 0.1 | PIGMENT DISPERSION |
| 5 | DECAL 2043 | 0.1 | DISPERSANT |
| 6 | ATTAGEL 350 | 0.5 | THICKENER |
| 7 | LONGCLIFFE L50 | 25 | FILLER |
| 8 | EMULTEX 518 | 15 | BINDER |
| 9 | NORPOL WPC/P100 | 15 | AGGREGATE |
| 10 | AMP 95 | 0.3 | pH buffer |
| 11 | DECAL 1030 | 3.0 | THICKENER |

Typically, the components are added together in the order 1-11 for the components given in Table 1 above. However, this order of addition is flexible so that, for example, any of components 2, 3, 4 and 5 may be added interchangeably in any order, the order of the components 6, 7, 8 and 9 is entirely interchangeable, and the order of the components 10 and 11 is also interchangeable. However, it will be readily apparent to the skilled person which alternative orders of addition are more suitable than others.

It is of course to be understood that the invention is not intended to be restricted to the details of the above embodiments which are described by way of example only.

## Claims

1. A primer composition for use in the construction industry comprising an adhesive agent, particles of a solid plastic material, and water, for preparing a surface to which plaster or render may subsequently be applied.

2. A composition according to claim 1, wherein the plastic comprises recycled or virgin plastic.

3. A composition according to claim 1 or claim 2, comprising from about 5.0 to 50% by weight of the solid plastic material.

4. A composition according to claim 3, comprising from about 10 to 30% by weight of the solid plastic material.

5. A composition according to claim 4, comprising about 15% by weight of the solid plastic material.

6. A composition according to any preceding claim, wherein the adhesive agent comprises polyvinyl acetate, styrene-butadiene rubber, dammar resin, a cellulose derivative such as cellulose sodium glycolate, methyl cellulose, carboxy methylhydroxyethyl cellulose, hydroxyethyl cellulose, and propyl cellulose, sodium alginate, starch, dextrin, a polyvinyl alcohol, a (poly)vinyl resin, sodium silicate or other rubber-based adhesives or their constituent elements.

7. A method of manufacturing a primer composition for use in the construction industry according to any of claims 1-6, comprising the steps of:
i) providing an adhesive agent, particles of a solid plastic material and water; and
ii) mixing these components together.

8. Use of a composition according to any of claims 1-7 in at least partially coating a surface.

9. Use according to claim 8 in the preparation of a surface to which plaster or render may subsequently be applied.

10. A method of preparing a surface to which plaster or render may subsequently be applied, comprising applying an amount of a composition according to any of claims 1-6 to the surface prior to the application of the plaster or render.

## Patentansprüche

1. Grundierungszusammensetzung zur Verwendung in der Bauindustrie mit einem Klebemittel, Teilchen eines festen Plastikmaterials und Wasser, zum Herstellen einer Oberfläche auf die nachfolgend Putz oder Gips aufgetragen werden kann.

2. Zusammensetzung nach Anspruch 1,
wobei das Plastik wiederverwertetes oder neu hergestelltes Plastik enthält.

3. Zusammensetzung nach Anspruch 1 oder 2,
mit etwa 5,0 bis 50 Gew.-% des festen Plastikmaterials.

4. Zusammensetzung nach Anspruch 3,
mit etwa 10 bis 30 Gew.-% des festen Plastikmaterials.

5. Zusammensetzung nach Anspruch 4,
mit etwa 15% Gew.-% des festen Plastikmaterials.

6. Zusammensetzung nach einem der vorstehenden Ansprüche,
wobei das Klebemittel Polyvinylacetat, Styrol-Butadien-Gummi, Dammarharz, ein Cellulosederivat wie Cellulosenatriumglykolat, Methylcellulose, Carboxymethylhydroxyethylcellulose, Hydroxyethylcellulose und Propylcellulose, Natriumalginat, Stärke, Dextrin, ein Polyvinylalkohol, ein (Poly)vinylharz, Natriumsilikat oder andere Gummi-basierende Klebstoffe oder deren wesentliche Bestandteile enthält.

7. Verfahren zum Herstellen einer Grundierungszusammensetzung zur Verwendung in der Bauindustrie nach einem der Ansprüche 1-6 mit den Schritten:
i) Bereitstellen eines Klebemittels, Teilchen eines festen Plastikmaterials und Wasser; und
ii) Zusammenmischen dieser Komponenten.

8. Verwendung einer Zusammensetzung nach einem der Ansprüche 1-7 in zumindest einer teilweisen Beschichtung einer Oberfläche.

9. Verwendung nach Anspruch 8 in der Herstellung einer Oberfläche auf die nachfolgend Putz oder Gips aufgetragen werden kann.

10. Verfahren zum Herstellen einer Oberfläche auf die nachfolgend Putz oder Gips aufgetragen werden kann, mit Auftragen einer Menge einer Zusammensetzung nach einem der Ansprüche 1-6 auf die Oberfläche vor dem Auftragen des Putzes oder Gipses.

## Revendications

1. Composition de couche primaire destinée à être utilisée dans l'industrie du bâtiment comprenant un agent adhésif, des particules d'une matière plastique solide et de l'eau, pour préparer une surface sur laquelle on peut ensuite appliquer du plâtre ou un enduit.

2. Composition selon la revendication 1, dans laquelle le plastique comprend un plastique recyclé ou vierge.

3. Composition selon la revendication 1 ou 2, comprenant d'environ 5,0 jusqu'à 50% en poids de la matière plastique solide.

4. Composition selon la revendication 3, comprenant d'environ 10 jusqu'à 30% en poids de la matière plastique solide.

5. Composition selon la revendication 4, comprenant environ 15% en poids de la matière plastique solide.

6. Composition selon l'une des revendications précédentes, dans laquelle l'agent adhésif comprend un acétate polyvinylique, du caoutchouc de butadiène-styrène, la résine de dammar, un dérivé cellulosique tel que la cellulose glycolate de sodium, la méthylcellulose, la carboxy méthylhydroxyéthylcellulose hydroxyéthylcellulose, et la propylcellulose, l'alginate de sodium, l'amidon, la dextrine, un alcool polyvinylique, une résine (poly)vinylique, du silicate de sodium ou d'autres adhésifs à base de caoutchouc ou leurs éléments constitutifs.

7. Procédé de fabrication d'une composition de couche primaire destinée à être utilisée dans l'industrie du bâtiment selon l'une des revendications 1 à 6, comprenant les étapes consistant :
i) à fournir un agent adhésif, des particules d'une matière plastique solide et de l'eau ; et
ii) à mélanger les composants entre eux.

8. Utilisation d'une composition selon l'une des revendications 1 à 7 dans au moins le revêtement partiel d'une surface.

9. Utilisation selon la revendication 8 dans la préparation d'une surface sur laquelle on peut ensuite appliquer du plâtre ou un enduit.

10. Procédé de préparation d'une surface sur laquelle on peut ensuite appliquer du plâtre ou un enduit, comprenant le fait d'appliquer une quantité d'une composition selon l'une des revendications 1 à 6 sur la surface avant l'application du plâtre ou un enduit.
